# EUROPEAN PATENT APPLICATION

(11) **EP 3 731 037 A1**
(43) Date of publication of application: **28.10.2020**
(21) Application number: 20166473.7
(22) Date of filing: 27.03.2020
(51) Int. Cl.: G05B 13/04, G05B 15/02

(54) **METHOD FOR FORECASTING POWER CONSUMPTION**

(30) Priority: 26.04.2019 US 201962839494 P
(71) Applicant: Carrier Corporation, Palm Beach Gardens, FL 33418 (US)
(72) Inventor: RIVERSO, Stefano, Cork City (IE); TORCHIO, Marcello, Cork City (IE)
(74) Representative: Dehns

(57) **Abstract**

A method for predicting power consumption includes selecting data from a set of available data regarding power consumption of a building (20), extracting essential features of the data, determining a basis function for a model based on the essential features, generating a power consumption model based on the basis function, the power consumption model operable to generate a prediction of power consumption of the building, and communicating the prediction to an end node, the end node operable to implement power conservation strategies based on the prediction. A building energy management system (22) is also disclosed.

## Description

### BACKGROUND

Buildings, such as university buildings, office buildings, residential buildings, commercial buildings, and the like, incorporate one or more electrically powered systems and devices. The electrically powered systems and devices can be powered at least partially by electricity supplied from a centralized electrical power source ("electrical grid"). The electrically powered systems and devices communicate with the electrical grid regarding power demand and availability.

### SUMMARY

A method for predicting power consumption of a building according to an example of the present disclosure includes selecting data from a set of available data regarding power consumption of a building, extracting essential features of the data, determining a basis function for a model based on the essential features, generating a power consumption model based on the basis function, the power consumption model operable to generate a prediction of power consumption of the building, and communicating the prediction to an end node, the end node operable to implement power conservation strategies based on the prediction.

The method may be started automatically.

A query may be performed to identify the set of available data prior to the selecting step.

The selecting step may include selecting date provided by an external user.

The data may be filtered and normalized prior to the extracting step.

The data may be analyzed by spectral analysis in order to identify the essential features.

The method may comprise updating the model.

Updating the model may include identifying new data.

The end node may be a user.

The end-application may be a Building Energy Management System.

The set of available data may include data from at least one electrical system or device in the building.

The set of available data may include data stored in cloud data storage or data storage local to the building.

The set of available data may include climate data.

The set of available data may include information about the occupants of the building.

A building energy management system according to an example of the present disclosure includes a computing device configured to automatically select data from a set of available data regarding power consumption of a building, extract essential features of the data, determine a basis function for a model based on the essential features, generate a power model based on the basis function, the power consumption model operable to generate a prediction of power consumption of the building, and communicate the prediction to an end node, the end node operable to implement power conservation strategies based on the prediction.

The building energy management system may comprise a data storage device, and the set of available data may include data from the data storage device.

The building may include at least one electrical system or device, and the set of available data may include data from the at least one electrical system or device.

The at least one electrical system or device may include one of a climate system, a lighting system, and a security system.

The computing device may be configured to identify new data and update the model based on the new data.

The building energy management system may include the end node.

### BRIEF DESCRIPTION OF THE DRAWINGS

Certain embodiments of the disclosure will now be described in greater detail, by way of example only and with reference to the accompanying drawings.
Figure 1 schematically illustrates a building.
Figure 2 schematically illustrates a method of predicting power consumption of the building of Figure 1.

### DETAILED DESCRIPTION

Demand-side management (DSM) for electric systems and devices includes various methods and directives for reducing power demand on centralized electrical power sources by electrical systems and devices. These methods and directives can include incorporating energy sources other than electrical power, (e.g., solar power or other forms of renewable energy), incorporating electrical power storage systems, and controlling flexible power demands. Generally, the electrical power source is in communication with the systems or devices to which it provides electrical power, and vice versa. The electrical power source and systems/devices share information and make decisions about how and when to produce and consume electrical power. In this way, DSM allows an electrical power source, such as a "smart" electrical grid, to balance electrical production and consumption over time ("power consumption," since power is expressed as energy per time).

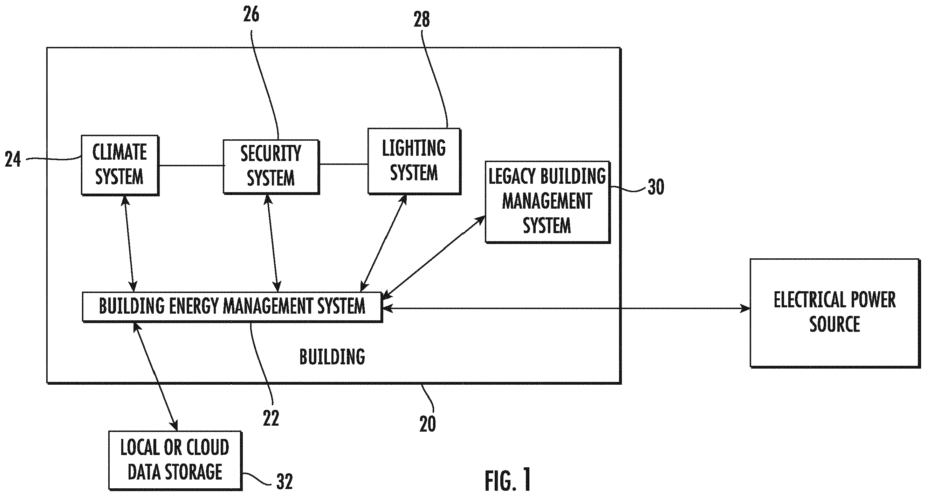

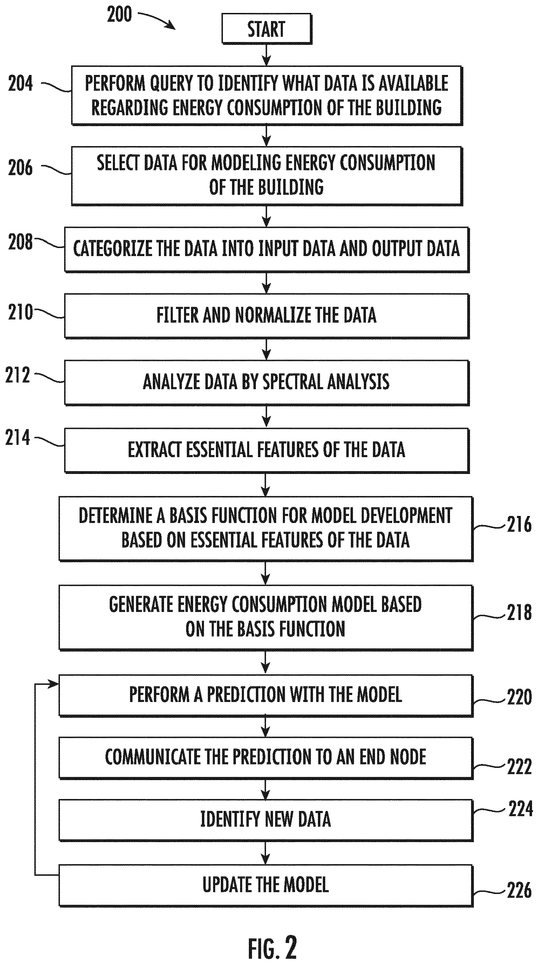

Part of DSM is predicting energy load requirements. This information is shared between energy loads, e.g., buildings, and the electrical power source to help balance power production and consumption, as discussed above. Figure 1 schematically illustrates an example building 20 with a Building Energy Management System 22 (BEMS). The BEMS 22 includes or is a computing device that is configured to predict the power consumption of the building 20 according to the method 200, shown in Figure 2 and discussed in detail below. The BEMS is also configured to store and/or retrieve data about the power consumption of the building 20.

The building 20 includes electrical systems and/or devices that use electrical power. In the example of Figure 2, the building 20 includes such as climate system 24, lighting system 26, and security system 28, though other electrical systems and devices are known in the art. The power consumption of the building 20 is cumulative of the power consumption of individual electrical systems/devices 24, 26, 28 in the building 20.

Figure 2 schematically illustrates a method 200 of predicting power consumption of a building 20. In step 202, the method 200 starts automatically, or without any user input.

In step 204, the BEMS 22 performs a query to identify what data is available regarding power consumption of the building 20. The BEMS 22 communicates the query to electrical systems/devices 24, 26, 28 and/or a "legacy" or existing building management system 30 in the building 20. The BEMS 22 may also communicate the query to another local or cloud data storage 32 (Figure 1). For example, the stored data can be data previously received from the systems/devices 24, 26, 28 and/or a "legacy" or existing building management system 30. The query may also identify data stored in data storage within the BEMS 22 itself. The electrical systems/devices 24, 26, 28 and/or a "legacy" or existing building management system 30 and/or data storage 32 communicate to the BEMS 22 what data regarding power consumption of the building 20 is available.

The power consumption data includes historical energy consumption data for the building 20 (e.g., energy consumption over time), current energy consumption data for the building 20, or both.

The power consumption data can also include auxiliary information. The auxiliary information is additional information that is related to power consumption of the building 20. For example, the auxiliary information can include data relating to historical and/or current operating parameters of the various electrical systems/devices 24, 26, 28 and their subcomponents, such as temperature, pressure, motor drive speed, etc. This data can be gathered by sensors or monitors at the systems/devices 24, 26, 28. The operating parameters are related to power consumption of the individual electrical systems/devices 24, 26, 28.

The auxiliary data can include information about the occupants of the building 20. For instance, the number of occupants, occupant behavior (e.g., entry/exit times), and occupant preferences. This information is related to power consumption of the building 20 because occupants, their behavior, and their preferences can affect the power consumption of the building 20 over time. For instance, power consumption is reduced during times of low occupancy.

The auxiliary data can also include external climate information (which may affect energy consumption of a climate system 24 of the building 20, for example).

The auxiliary data can also include data provided by an external user to the BEMS 22. For instance, an external user can provide occupancy data for an upcoming period, if the upcoming occupancy is different from normal building 20 occupancy. As another example, the external user can provide a weather forecast, though other types of data are also contemplated.

The auxiliary data discussed above is exemplary, and the auxiliary data can also include any other type of data that is related to power consumption of a building.

In step 206, the BEMS 22 selects data for modeling power consumption of the building 20. In particular, the BEMS 22 receives and recognizes the power consumption data and auxiliary data (if any) from step 204.

In step 208, the data is automatically categorized into input data and output data. Input data is the set of data that is used to model energy consumption of the building 20, e.g., the data from step 204, in order to make predictions about building 20 power consumption. Input data is related to variables that are included in the model. For instance, a variable may be time, and the related input datum is the current time of day. Another example variable is occupancy, and a related input datum is number of occupants in the building 20 at a certain time. Another example variable is the climate outside of the building 20, and a related input datum is outside air temperature. In one example, input data includes data related to a static, pre-determined set of data variables. In another example, the set of variables for which input data is included is determined by the BEMS 22 to maximize accuracy and precision to the prediction model. Output data is the quantities that will be predicted by the model. For instance, an output datum could be a power consumption for climate system 22. The categorizing can be by any known data clustering technique.

In step 210, the data is filtered and normalized according to any know data filtering or normalizing technique. For example, a data filtering or normalizing technique can be automatically selected by the BEMS 22 in order to in order to remove outliers from the data and enable extraction of the most informative data.

Steps 208 and 210 result in the extraction of "sensible data" from the data in step 206. This extraction of sensible data helps avoid numerical issues in the subsequent modeling steps and increase the accuracy of the subsequent models derived from the data.

In step 212, the sensible data from steps 208/210 is analyzed by spectral analysis according to any known spectral analysis method, such as Fourier analysis. The spectral analysis highlights essential features of the sensible data.

In step 214, the essential features from step 214 are extracted from the data by any know method of periodicity analysis.

In step 216, the essential features are used to determine a basis function for model development. A basis function represents the basic mathematical elements, or structure, that the data suggests should be present in the resulting mathematical model. Determination of a basis function can be accomplished by any known methods. The essential features provide a robust and accurate model structure, even where the original data set in step 206 is relatively small.

In step 218, a model for building 20 power consumption is generated based on the basis function identified in step 216. The model can be generated by any known computationally efficient methodologies, such as those based on Least Square methods.

In step 220, the model from step 218 is used to perform a prediction, that is, to predict power consumption of the building 20 at a future time. The prediction can be in the long term, e.g., days in the future, or in the short term, e.g., hours in the future.

In step 222, the prediction from step 220 is communicated to an end node for the method 200. The end node can be a user, e.g. a person, and/or an end-application, e.g., another system or method that is configured to use the prediction as an input, like the power source (e.g., smart grid). In another example, the BEMS 22 itself includes the end node. The end node implements power conservation strategies according to DMS, as described above, based on the prediction. For example, if the prediction indicates an upcoming peak in power consumption of the building 20, the BEMS 22 may direct the building 20 to implement power saving mechanisms, for instance, drawing power from power storage devices rather than or in addition to the electric utility (e.g., smart grid), or changing set points for the climate system to reduce power consumption of the climate system.

In step 224, the BEMS 22 identifies any new data not considered in step 206. For instance, the new data can be new measurements or operator information that were collected since the method 200 was started in step 202. This allows the model to adapt to the time-varying nature of the power consumption of the building 20, and to adapt in order to efficiently account for unexpected or never before seen behavior. On longer time scales, new data may include data from new sensors installed in the building 20 that measure operating parameters for the systems/devices 24, 26, 28 that are relevant to power consumption of the building 20, as discussed above. New data may also include data from sensors or monitors other than those in building 20. For instance, a new weather station could be installed adjacent building 20, and the new data collected by this weather station could be additionally used to improve the model predictability.

In step 226, the model from step 218 is updated based on the new data from step 224 according to any known recursive modeling methods. After step 226, the model returns to step 220.

The automatic start of the method 200 in step 202 enables the method 200 to continuously run, or run frequently at predetermined intervals. Therefore, the model can be updated with new data from step 222 frequently, for example, the auxiliary data discussed above. With each update, the accuracy of the model increases. This is especially important for small data sets, since in general, the more data used to create the model, the more accurate the model is.

Furthermore, the automatic nature of the method 200 removes the need for a building 20 user (e.g., an operator) to tune any parameters in the model.

The preceding description is exemplary rather than limiting in nature. Variations and modifications to the disclosed examples may become apparent to those skilled in the art that do not necessarily depart from the scope of the invention, which is defined by the claims. The scope of legal protection given to the invention can only be determined by studying the following claims.

## Claims

1. A method for predicting power consumption of a building (20), comprising:
selecting data from a set of available data regarding power consumption of the building;
extracting essential features of the data;
determining a basis function for a model based on the essential features;
generating a power consumption model based on the basis function, the power consumption model operable to generate a prediction of power consumption of the building; and
communicating the prediction to an end node, the end node operable to implement power conservation strategies based on the prediction.

2. The method of claim 1, wherein the method is started automatically.

3. The method of claim 1 or 2, further comprising performing a query to identify the set of available data prior to the selecting step.

4. The method of claim 1, 2 or 3, wherein the selecting step includes selecting data provided by an external user.

5. The method of any preceding claim, further comprising filtering and normalizing the data prior to the extracting step.

6. The method of any preceding claim, further comprising analyzing the data by spectral analysis in order to identify the essential features.

7. The method of any preceding claim, further comprising updating the model, and preferably wherein the updating includes identifying new data.

8. The method of any preceding claim, wherein the end node is a user, and preferably wherein the end-application is a Building Energy Management System.

9. The method of any preceding claim, wherein the set of available data includes at least one of: data from at least one electrical system or device in the building, data stored in cloud data storage or data storage local to the building, climate data, and information about the occupants of the building.

10. A building energy management system (22), comprising:
a computing device configured to automatically select data from a set of available data regarding power consumption of a building (20), extract essential features of the data, determine a basis function for a model based on the essential features, generate a power consumption model based on the basis function, the power consumption model operable to generate a prediction of power consumption of the building, and communicate the prediction to an end node, the end node operable to implement power conservation strategies based on the prediction.

11. The building energy management system of claim 10, further comprising a data storage device (32), and wherein the set of available data includes data from the data storage device.

12. The building energy management system of claim 10 or 11, wherein the building includes at least one electrical system or device (24, 26, 28), and wherein the set of available data includes data from the at least one electrical system or device.

13. The building energy manage system of claim 12 wherein the at least one electrical system or device includes one of a climate system (24), a lighting system (26), and a security system (28).

14. The building energy management system of any of claims 10 to 13, wherein the computing device is configured to identify new data and update the model based on the new data.

15. The building energy management system of any of claims 10 to 14, wherein the building energy management system includes the end node.
